# EUROPEAN PATENT SPECIFICATION

(11) **EP 3 063 058 B1**
(45) Date of publication and mention of the grant of the patent: **03.01.2018**
(21) Application number: 14802172.8
(22) Date of filing: 17.10.2014
(51) Int. Cl.: B62L 3/02, B60T 7/10, B60T 11/22

(54) **ACTUATION DEVICE FOR BRAKES OR CLUTCHES, IN PARTICULAR FOR MOTORCYCLES**
BETÄTIGUNGSVORRICHTUNG FÜR BREMSEN ODER KUPPLUNGEN, INSBESONDERE FÜR MOTORRÄDER
DISPOSITIF ACTIONNEUR DESTINÉ À DES FREINS OU DES EMBRAYAGES, EN PARTICULIER POUR DES MOTOCYCLES

(30) Priority: 29.10.2013 IT BS20130152
(43) Date of publication of application: 07.09.2016
(73) Proprietor: Freni Brembo S.p.A., 24035 Curno, (Bergamo) (IT)
(72) Inventor: ESPOSITO, Alessandro, I-24035 Curno Bergamo (IT); LAVEZZI, Roberto, I-24035 Curno Bergamo (IT)
(74) Representative: Mitola, Marco
(86) International application number: PCT/IB2014/065415
(87) International publication number: WO 2015/063645

(56) References cited:
- JP-A- S59 206 251
- US-B1- 6 922 994
- US-B2- 6 871 729

## Description

### FIELD OF APPLICATION

The present invention relates to an actuation device for brakes or clutches, in particular for motorcycles.

### STATE OF THE ART

In particular, in the motorcycle sector, the actuation devices for brakes or clutches, typically of the hydraulic type, comprise a device body attached to the handlebar of the motorcycle by means of attachment brackets which identify a cylindrical seat thanks to which they are clamped around a portion of the motorcycle handlebar.

The device body also comprises a tank of liquid for the actuation of the brake and/or clutch by means of a manual actuation device, such as typically an actuation lever which acts by pressurising the liquid of the hydraulic circuit, by means of a suitable piston.

In the known solutions, the actuation devices comprise separate closing means respectively for the stopper of the tank of liquid and for the attachment brackets.

In fact, the stopper of the tank must be hermetically sealed in order to prevent the formation of dangerous air bubbles inside the hydraulic circuit as well as to prevent the entrance of moisture inside the tank, since the liquid used is highly hygroscopic.

In addition, it is necessary to avoid any leakage of hydraulic liquid which would constitute a danger for the functioning of the device in addition to causing damage to the motorcycle, given that such liquid is also highly corrosive.

Moreover, the tightening of the attachment brackets around the handlebar must be guaranteed in order to avoid any possible movement of the actuation device in relation to the handlebar.

Such tightening must also be guaranteed over time despite the significant vibrations that the motorcycle normally transmits to the handlebar and therefore to said actuation device, during use of the motorcycle.

Consequently, the proper tightening of the screws or bolts closing the stopper of the tank and the attachment brackets is a critical issue in the actuation devices for brakes and clutches for motorcycles.

In the prior solutions, separate screws or bolts are used to respectively attach the stopper to the tank and the attachment brackets to the relative handlebar.

Usually each of said components provides for a pair of attachment screws or bolts.

This way in the prior solutions the attachment brackets and stopper of the tank are completely unrelated to each other aesthetically.

In addition, a relatively large number of attachment means for the same must be used, which therefore increases the costs and assembly times of the actuation device.

Document US 6 871 729 B2 discloses an actuation device according to the preamble of claim 1.

### PRESENTATION OF THE INVENTION

It follows, therefore, that the solutions of the prior art are expensive to produce and to assemble and unattractive from the aesthetic point of view which, in the world of motorcycles, is of extreme importance.

The need is therefore felt to resolve the drawbacks and limitations mentioned with reference to the prior art.

Such need is satisfied by an actuation device according to claim 1.

In particular, such need is satisfied by an actuation device 4 for brakes and/or clutches, in particular for motorcycles, comprising a device body 8 provided with a tank of liquid 28 for the actuation of said device 4 and a pump suitable to pressurise said liquid, the tank 28 being provided with an opening 32 and a relative stopper 36 applied to said opening 32, a connection portion 12 suitable to permit the connection of the device 4 to the handlebar 16 of an associable motorcycle, a guide and support portion 20 of an actuation element 24 of the device 4, such as for example an actuation lever 24 rotating around a guide pin 54 defining an actuation axis Y-Y so as to influence said pump, wherein the connection portion 12 comprises a pair of attachment brackets 40 partially counter-shaped to the associable handlebar 16 so as to form a housing seat 44 having a cylindrical configuration of the longitudinal axis X-X, suitable to partially house the portion of handlebar 16 used for the attachment of the actuation device 24, wherein the device 4 comprises a pair of threaded connection means 56, 60 connecting the attachment brackets 40 to each other so as to tighten the walls defining the housing seat 44 against the associable handlebar 16, characterised in that the stopper 36 comprises a first attachment portion 64 to constrain the stopper 36 to the device body 8, wherein the first attachment portion 64 intercepts one of the threaded connection means 56, 60 and/or the guide pin 54 to attach the stopper and hermetically seal the tank 28.

According to a further embodiment, the first attachment portion 64 comprises a perforated base plate crossed by one of the threaded connection means 56, 60 and/or the guide pin 54.

According to a further embodiment, the first attachment portion 64 comprises a hook portion provided with an opening so as to intercept and receive at least partially one of the threaded connection means 56, 60 and/or the guide pin 54.

According to a further embodiment, the first attachment portion 64 intercepts a threaded connection means 56, which connects the attachment brackets 40 to each other, positioned adjacent to the guide and support portion 20 of the actuation element 24 of the device 4.

According to a further embodiment, the stopper 36 comprises a second attachment portion 72, separate from said first attachment portion 64, and constrained to the device body 8 by second detachable connection means 76.

According to a further embodiment, said second detachable connection means 76 comprise a shaped coupling, between a seat 80 and a protuberance 84 respectively made on the device body 8 and on the stopper 36 or vice versa.

According to a further embodiment, the protuberance 84 fits into the seat 80 so as to form an undercut in a direction perpendicular to the stopper 36.

According to a further embodiment, the shaped coupling between the seat 80 and the protuberance 84 is shaped so as to couple and uncouple the stopper 36 from the tank 28 by rotating said stopper 36 around the first threaded connection means 56 connecting the attachment brackets 40 to each other.

According to a further embodiment, one of said attachment brackets 40' is the lower bracket, namely opposite said stopper 36 of the tank 28 of liquid, and extends in a single piece from a first to a second end 48, 52, wherein the first end 48 is facing the connection portion 12 and the second end 52 is facing the support and guide portion 20, so as to intercept and connect further to each other the connection portion 12 and the support and guide portion 20.

According to a further embodiment, the stopper 36 comprises an inner collar 88 substantially counter-shaped to an inner side wall 90 of said opening 32 of the tank 28, so as to at least partially penetrate inside said opening 32 and identify an interspace 92 comprised between the inner collar 88 and said inner side wall 90.

According to a further embodiment, the tank 28 comprises a membrane gasket 94 which occludes said aperture 32, said gasket 94 being provided with a sealing lip 96 which, in an assembled configuration, inserts itself in said interspace 92 so as to be radially compressed between the inner collar 88 and said inner side wall 90.

According to a further embodiment, the membrane gasket 94 is fitted with an upper lip 98 having a greater extension than the opening 32 of the tank 28 so as to form an undercut to the penetration of the gasket 94 inside the tank 28, said upper lip 98, in an assembled configuration, stopping in abutment against a perimetral rim 102 which follows the perimeter of said opening 32.

According to a further embodiment, the stopper 36 comprises a perimetral seat 104 counter-shaped to said upper lip 98 of the gasket 94, so as to receive the upper lip 98 with interference.

According to a further embodiment, the stopper 36 comprises a perimetral rib positioned at said perimetral seat 104 so as to compress and increase the hermetic seal of said upper lip 98.

According to a further embodiment, said inner collar 88 comprises a first flange 106 connected by means of a radial recess 108 to a second flange 110, said second flange 110 and said radial recess 108 defining the interspace 92 which houses a sealing lip 96 of the gasket 94.

### DESCRIPTION OF THE DRAWINGS

Further characteristics and advantages of the present invention will be more clearly comprehensible from the description given below of its preferred and non-limiting embodiments, wherein:

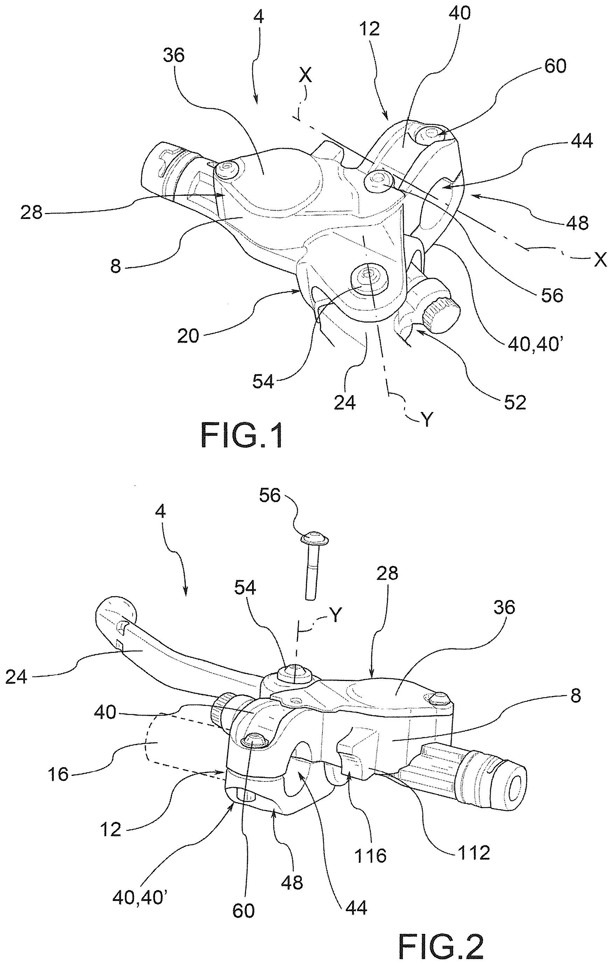

figures 1-2 show perspective views, from different angles, of an actuation device according to one embodiment of the present invention;

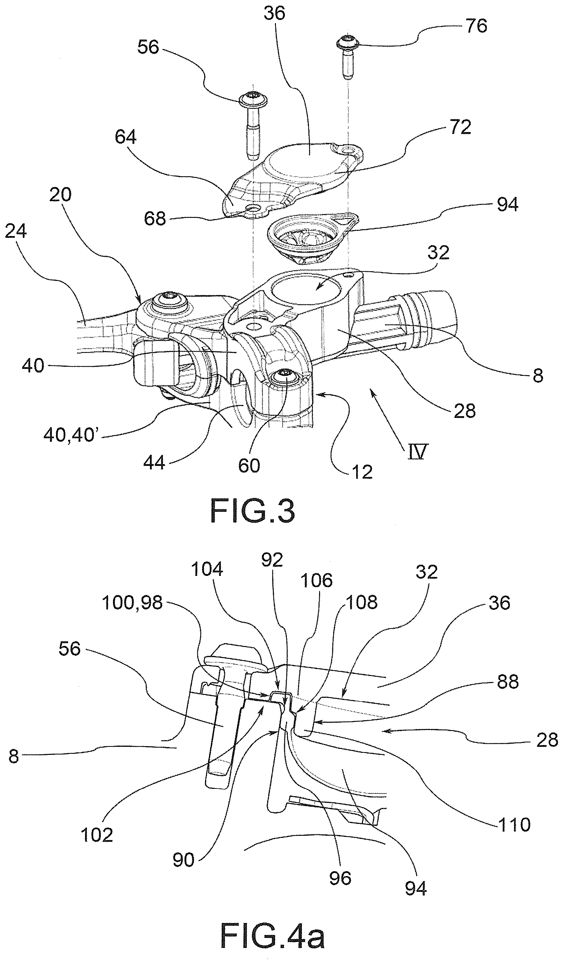

figure 3 shows a perspective view, in separate parts, of the actuation device in figure 1;

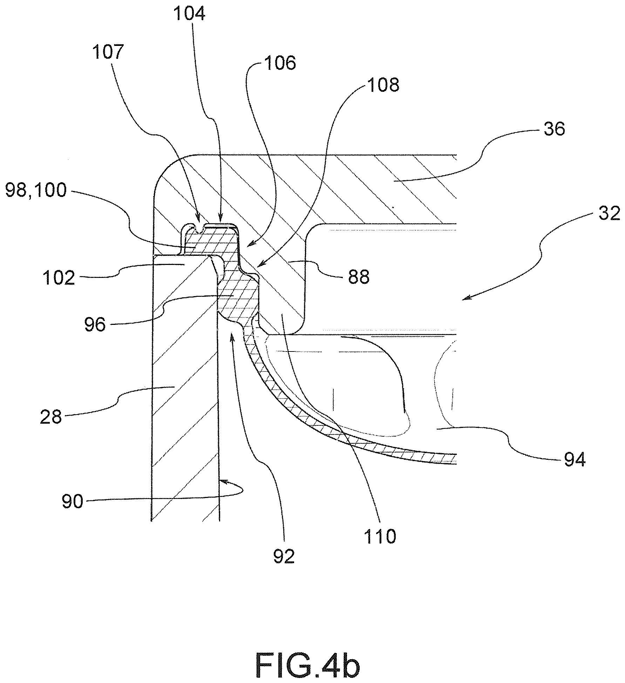

figures 4a-4b are cross-section views of the enlarged detail IV in figure 3, in an assembled configuration;

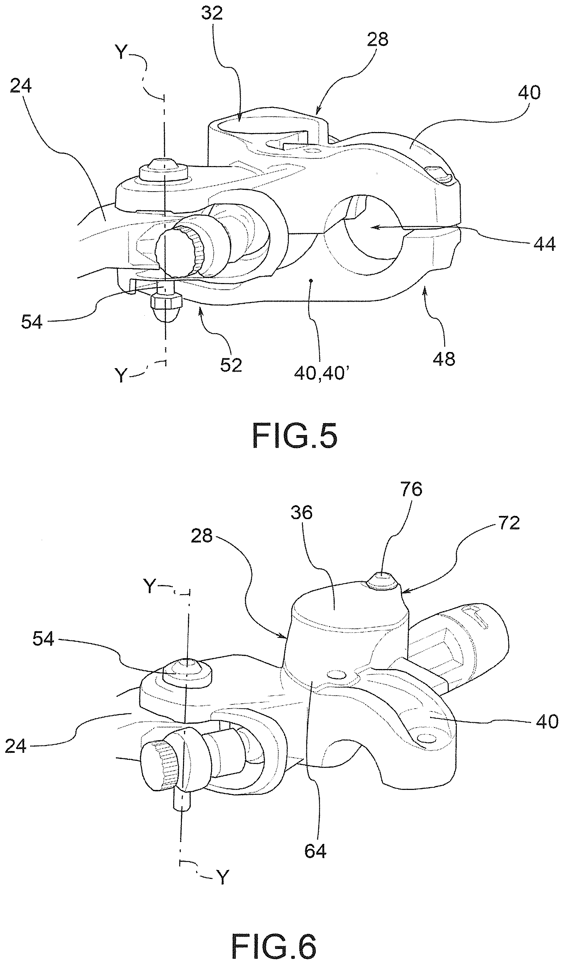

figures 5 and 6 show perspective views of a maintenance step of the actuation device according to the present invention;

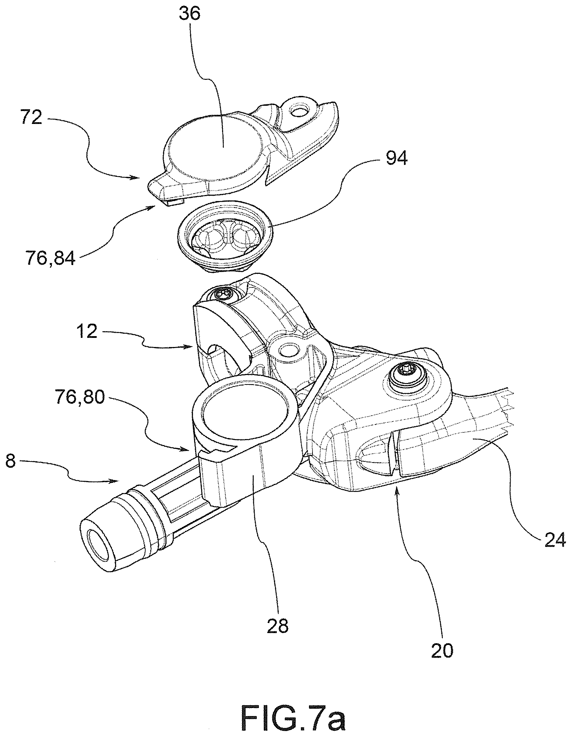

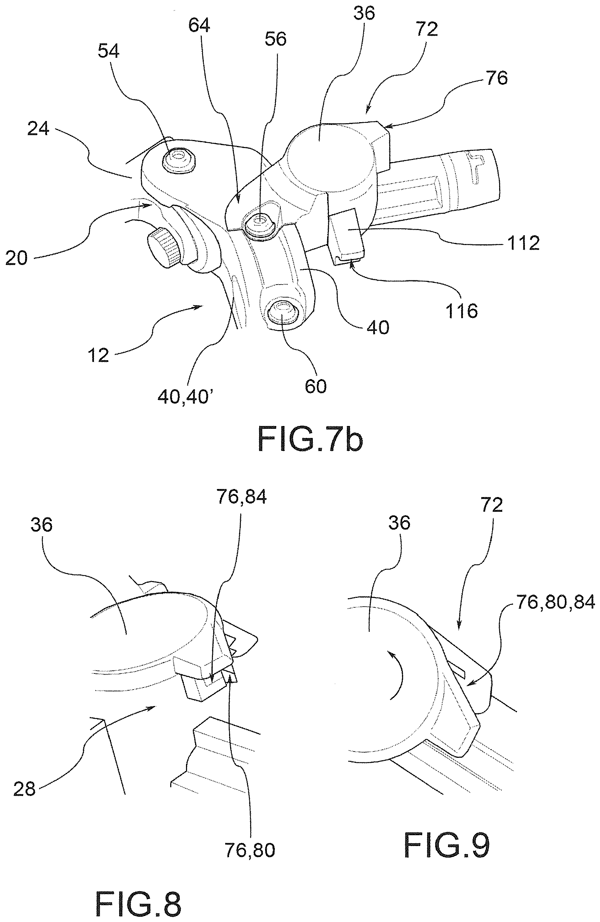

figures 7a-7b show perspective views, respectively in separate parts and in an assembled configuration of an actuation device according to a further embodiment of the present invention;
figures 8 and 9 are perspective views of assembly steps of the device in figure 7;

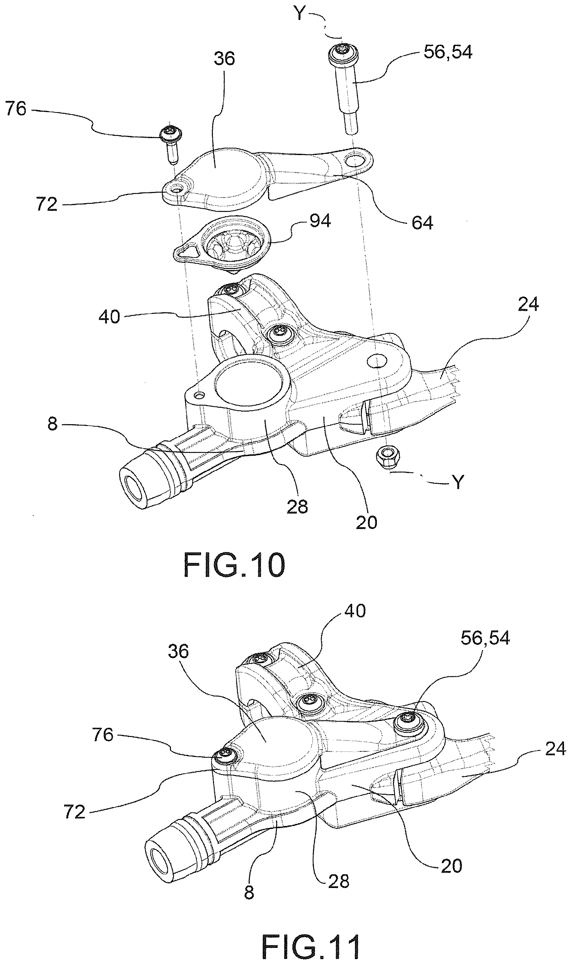

figures 10 and 11 show perspective views, respectively in separate parts and in an assembled configuration of an actuation device according to a further embodiment of the present invention;

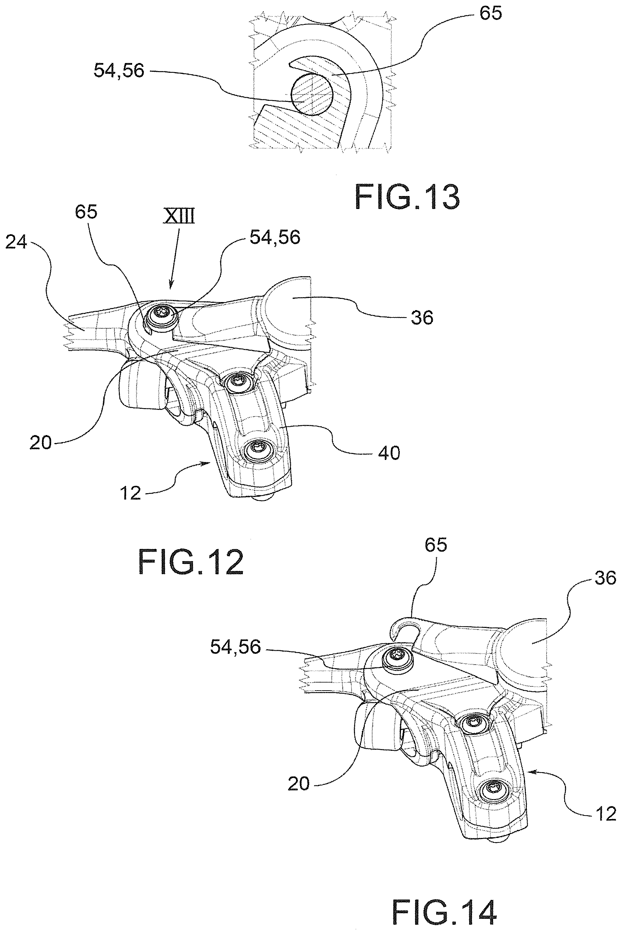

figure 12 shows a perspective view, in an assembled configuration, of an actuation device according to a further embodiment of the present invention;
figure 13 shows the enlarged detail XIII in figure 12;
figure 14 shows the device in figure 13 in the configuration of partial assembly;
figure 15 shows a further enlarged view of the detail XIII in figure 12;
figures 16a-16b show cross-section views of the detail in figure 15, along the cross-section plane XVI-XVI figure 15, according to two different embodiments of the present invention;

The elements or parts of elements common to the embodiments described below will be indicated using the same reference numerals.

### DETAILED DESCRIPTION

With reference to the aforementioned figures, reference numeral 4 globally denotes an actuation device for brakes and/or clutches, in particular for motorcycles, provided with a device body 8. The device body 8 may be made of any material, preferably metal and/ or polymeric material.

The device 4 comprises a connection portion 12 suitable to permit the connection of the device 4 to the handlebar 16 of an associable motorcycle, a guide and support portion 20 of an actuation element 24 of the device 4, such as for example an actuation lever 24 rotating around an actuation axis Y-Y.

The device body 8 is provided with a tank of liquid 28 for the actuation of said device 4 and a pump (not shown) suitable to pressurise said liquid, the tank 28 being provided with an opening 32 and a relative stopper 36 applied to said opening 32.

Preferably, the device body 8 comprises and is in one piece with said tank of liquid 28.

The actuation lever 24, rotated by the user, acts in a known manner on a piston device such as a pump (not shown) which pressurises the fluid contained in said tank of liquid 28; such pressurised fluid, by means of a hydraulic circuit, will command the actuation of the device upstream, such as the brake or the clutch.

The connection portion 12 comprises a pair of attachment brackets 40 partially counter-shaped to an associable handlebar 16 so as to form a housing seat 44 having a cylindrical configuration of the longitudinal axis X-X, suitable to partially house the portion of handlebar 16 used for the attachment of the actuation device 4.

Preferably, one of said attachment brackets 40' extends in a single piece from a first to a second end 48, 52, wherein the first end 48 is facing the connection portion 12 and the second end 52 is facing the support and guide portion 20, so as to intercept and connect further to each other the connection portion 12 and the support and guide portion 20.

The attachment bracket 40 'which extends in one piece from the first to the second end 48, 52 is the lower bracket, i.e. opposite said stopper 36 of the tank of liquid 28.

According to one embodiment, the second end 52 of said bracket 40' supports the guide pin 54 defining the actuation axis Y-Y of the actuation lever 24.

According to one embodiment, the device 4 comprises a pair of threaded connection means 56, 60 which connect the attachment brackets 40 to each other so as to clamp the walls defining the housing seat 44 against the associable handlebar 16.

Advantageously, the stopper 36 comprises a first attachment portion 64 to constrain the stopper 36 to the device body 8, wherein the first attachment portion 64 intercepts one of the threaded connection means 56, 60 and/or the guide pin 54 to attach the stopper and hermetically seal the tank 28.

The term 'intercept' is understood to mean that the threaded connection means 56, 60 may be inserted directly into a slot or hole 68 associated with the first attachment portion 64 so as to tighten or axially compress the slot or it may be provided that the threaded connection means 56, 60 act on a plate, finger, bracket which in turn acts on the first attachment portion 64 of the stopper 36 so as to constrain it to said tank.

A second threaded connection means 60 is for example placed on the opposite side to the first threaded connection means 56 with respect to the housing seat 44: this way the first and the second threaded connection means 56, 60 are arranged on opposite sides of the housing seat so as to ensure the due tightening of the attachment brackets 40 on the handlebar 16.

According to a possible embodiment, the first attachment portion 64 comprises a perforated base plate crossed by one of the threaded connection means 56, 60 and/or the guide pin 54.

According to a possible embodiment, the first attachment portion 64 comprises a hook portion 65 provided with an opening so as to intercept and receive at least partially one of the threaded connection means 56, 60 and/or the guide pin 54.

For example, in the case in which the first attachment portion 64 intercepts the guide pin 54, thanks to the hook portion 65 it is possible to dismantle and reassemble the stopper 36 without completely removing said guide pin 54.

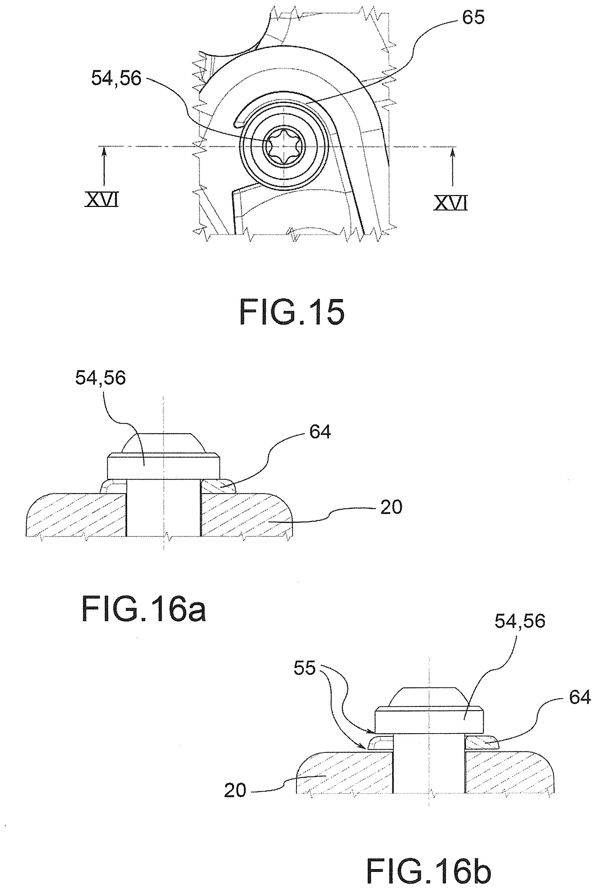

With both types of hole in the first attachment portion 64 of the stopper 36 (i.e. open hole, fitted with a hook portion 65, or closed hole), the guide pin 54 can abut on the stopper 36, further constraining it or abut on another surface of the device body 8, leaving some clearance 55 between the stopper 36 and the surrounding surfaces, as shown for example in figures 16a-16b. In the case where there is clearance 55 and a hole of the open type, i.e. with hook portion 65, it is possible to dismantle the stopper 36 without loosening the guide pin 54, in other cases it is necessary to at least loosen said guide pin.

According to a possible embodiment, the first attachment portion 64 intercepts a threaded connection means 56, which connects the attachment brackets 40 to each other, positioned adjacent to the guide and support portion 20 of the actuation element 24 of the device 4.

According to a possible embodiment, the stopper 36 comprises a second attachment portion 72, separate from said first attachment portion 64, and constrained to the device body 8 by second detachable connection means 76.

For example said second detachable connection means (76) comprise threaded connection means.

According to a further embodiment, the second detachable connection means 76 comprise a shaped coupling, between a seat 80 and a protuberance 84 respectively made on the device body 8 and on the stopper 36 or vice versa.

For example, the protuberance 84 fits into the seat 80 so as to form an undercut in a direction perpendicular to the stopper 36.

For example, the shaped coupling between the seat 80 and the protuberance 84 is shaped so as to couple and uncouple the stopper 36 from the tank 28 by rotating said stopper 36 around the first threaded connection means 56 connecting the attachment brackets 40 to each other. In particular, it is to be noted how the stopper 36, after having loosened the first threaded connection means 56, can rotate by pivoting around said first connection means 56, so as to engage the seat 80, made at the second attachment portion 72 thereof, onto the protuberance 84 made on the device body 8, or vice versa. The coupling between the seat 80 and the protuberance 84 is preferably snap on and forms an undercut to a direction perpendicular to the stopper 36 which cannot therefore be separated from the opening 32 of the tank 28.

According to one embodiment, the stopper 36 comprises an inner collar 88 substantially counter-shaped to an inner side wall 90 of said opening 32 of the tank 28, so as to at least partially penetrate inside said opening 32 and identify an interspace 92 comprised between the inner collar 88 and said inner side wall 90.

Preferably the tank 28 comprises a membrane gasket 94 which occludes said aperture 32, said gasket 94 being provided with a sealing lip 96 which, in an assembled configuration, inserts itself in said interspace 92 so as to be radially compressed between the inner collar 88 and said inner side wall 90.

According to one embodiment, the membrane gasket 94 is fitted with an upper lip 98 having a greater extension than the opening 32 of the tank 28 so as to form an undercut 100 to the penetration of the gasket 94 inside the tank 28, said upper lip 98, in an assembled configuration, stopping in abutment against a perimetral rim 102 which follows the perimeter of said opening 32.

A further function of the upper lip 98 is to limit the entrance of aggressive fluids (such as detergents used for washing), which could damage the sealing lip 96, both by reducing its seal or making it swell, which would make any subsequent dismantling/reassembly difficult.

Preferably, the stopper 36 comprises a perimetral seat 104 counter-shaped to said upper lip 98 of the gasket 94, so as to receive the upper lip 98 with interference.

According to one embodiment, the stopper 36 comprises a perimetral rib 107 positioned at said perimetral seat 104 so as to compress and increase the hermetic seal of said upper lip 98. The perimetral rib 107 made on the stopper 36 which runs along the perimeter makes it possible to locally increase the contact pressure; this way it is possible to ensure the seal without requiring an excessive compression force.

According to one embodiment, said inner collar 88 tapers radially moving from the stopper 36 towards the inside of the tank 28.

According to one embodiment, said inner collar 88 comprises a first flange 106 connected by means of a radial recess 108 to a second flange 110, said second flange 110 and said radial recess 108 defining the interspace 92 which houses the sealing lip 96 of the gasket 94.

According to one embodiment, the actuation device 4 comprises at least one support bracket 112, distanced from the attachment brackets 40 along said longitudinal axis X-X, on the opposite side to the actuation lever 24, wherein the support bracket 112 comprises a support end 116 suitable to rest on the associable handlebar 16.

Preferably, said support end 116 is shaped with a concave cylindrical geometry towards the associable handlebar, so as to lean against the side wall of said handlebar, in the assembled configuration of the actuation device 4 on the handlebar 16. This cylindrical shaping of the support end 116 allows the device body to rotate in relation to the handlebar in the event of an impact or a fall, at the same time making it possible to avoid bending the device body 8 in relation to the connection portion 12; in other words the device is not mounted so as to overhang the connection portion 12, but also makes use of a second handlebar support provided precisely by the contact between the support end 116 of the support bracket 112 and the handlebar itself.

As may be appreciated from the description, the actuation device according to the invention makes it possible to overcome the drawbacks of the prior art.

In particular, thanks to the present invention it is possible to reduce the number of components for the assembly of the actuation device for brakes and clutches, and thus the relative production and assembly cost.

Furthermore, there is a considerable aesthetic improvement of the actuation device, since the design of the tank stopper can be integrated, at least partially, with that of the device body and of the relative attachment brackets.

Moreover, thanks to such integration, it is also possible to cover the ribs and grooves normally present on the device body.

As seen, the total number of components is reduced by at least one unit and thus maintenance operations are also simplified, for example, both dismantling or repositioning the actuation device in relation to the handlebar, and replenishing hydraulic fluid inside the tank.

In particular, all the maintenance operations on the actuation device according to the present invention are not in any way complicated compared to the solutions of the prior art but, rather, are simplified given that the total number of the attachment means is reduced.

In particular, despite the interconnection between the tank stopper and the attachment brackets, removing the stopper, the device body, comprising the hydraulic pump, remains attached to the handlebar: in fact, the attachment of the device body is ensured both by the presence of the locking screw on the bracket, and by the fact that the lower bracket is in turn secured to the guide and attachment pin of the actuation lever.

In this way, just as in the solutions of the prior art, the dismantling of the stopper does not affect the attachment of the device body to the handlebar: this result is achieved in total safety and using a smaller number of attachment parts compared to the solutions of the prior art.

Moreover, despite the interconnection between the tank stopper and the attachment brackets, removing an attachment bracket for the removal of the device body from the handlebar, the tank of liquid remains closed and sealed: in fact, the mechanical attachment of the stopper is secured by the other screw, separate from the attachment bracket and, above all the absence of the pull i.e. compression at the dismantled attachment screw does not affect in any way the hydraulic seal of the gasket.

In the embodiments in which the stopper of the tank is attached by means of the guide pin, again it is possible to remove the stopper without thereby releasing the device body from the handlebar; furthermore it is also possible to remove the stopper without fully unscrewing the guide pin of the actuation lever.

Furthermore, as seen, the hydraulic seal is not achieved by axial compression of the peripheral edge of the gasket but by the radial compression of a special sealing lip. The radial compression of said sealing lip is guaranteed by the compression action caused by the inner collar of the stopper which radially compresses said sealing lip against the inner side wall of the tank. It is therefore sufficient to ensure the insertion of the stopper on the tank and, to such purpose, a single attachment screw is sufficient, i.e.the one not affected by the attachment bracket.

Moreover, the presence of the perimetral rib makes it possible to ensure the hermetic sealing of the membrane gasket and prevents the entry of water and/or dirt from the outside towards the inside of the tank.

Furthermore, it is also possible, as seen, to eliminate the second attachment screw of the tank stopper and replace it with a shaped coupling, for example an undercut: this coupling has the function of guaranteeing the insertion of the stopper on the tank so as to achieve the radial compression of the sealing lip by means of the inner collar of the stopper.

In such embodiment two attachment screws or bolts compared to the solutions of the prior art are saved.

This way, just as in the solutions of the prior art, the dismantling of the bracket, and thus the removal of the actuation device from the respective handlebar, does not affect the hydraulic seal of the tank: this result is achieved in total safety and using a smaller number of attachment components, compared to the solutions of the prior art.

The use of an attachment bracket which connects in one piece the first end facing the attachment portion, and the second end, facing the guide and support portion, as seen makes it possible to intercept and further connect the attachment portion and the guide and support portion to each other: this mechanical connection, combined with the presence of the support brackets, gives the actuation device a significant mechanical strength even in case of strong shocks and stresses.

A person skilled in the art may make numerous modifications and variations to the actuation devices described above so as to satisfy contingent and specific requirements while remaining within the sphere of protection of the invention as defined by the following claims.

## Claims

1. Actuation device (4) for brakes and /or clutches, in particular for motorcycles, comprising
- a device body (8) provided with a tank of liquid (28) for the actuation of said device (4) and a pump suitable to pressurise said liquid, the tank (28) being provided with an opening (32) and a relative stopper (36) applied to said opening (32),
- a connection portion (12) suitable to permit the attachment of the device (4) to the handlebar (16) of an associable motorcycle,
- a guide and support portion (20) of an actuation element (24) of the device (4) rotating around a guide pin (54) defining an actuation axis (Y-Y) so as to influence said pump,
- wherein the connection portion (12) comprises a pair of attachment brackets (40) partially counter-shaped to the associable handlebar (16) so as to form a housing seat (44) having a cylindrical configuration of the longitudinal axis (X-X), suitable to partially house the portion of handlebar (16) used for the attachment of the actuation device (24),
- wherein the device (4) comprises a pair of threaded connection means (56,60) which connect the attachment brackets (40) to each other so as to clamp the walls defining the housing seat (44) against the associable handlebar (16),
**characterised in that**
- the stopper (36) comprises a first attachment portion (64) to constrain the stopper (36) to the device body (8), wherein the first attachment portion (64) intercepts one of the threaded connection means (56,60) and/or the guide pin (54) to attach the stopper and hermetically seal the tank (28).

2. Actuation device (4) according to claim 1, wherein the first attachment portion (64) comprises a perforated base plate crossed by one of the threaded connection means (56,60) and/or the guide pin (54).

3. Actuation device (4) according to claim 1 or 2, wherein the first attachment portion (64) comprises a hook portion (65) provided with an opening so as to intercept and receive at least partially one of the threaded connection means (56,60) and/or the guide pin (54).

4. Actuation device (4) according to any of the previous claims, wherein the first attachment portion (64) intercepts a threaded connection means (56), which connects the attachment brackets (40) to each other, positioned adjacent to the guide and support portion (20) of the actuation element (24) of the device (4).

5. Actuation device (4) according to any of the previous claims, wherein the stopper (36) comprises a second attachment portion (72), separate from said first attachment portion (64), and constrained to the device body (8) by second detachable connection means (76).

6. Actuation device (4) according to claim 5, wherein said second detachable connection means (76) comprise a shaped coupling, between a seat (80) and a protuberance (84) respectively made on the device body (8) and on the stopper (36) or vice versa.

7. Actuation device (4) according to claim 6, wherein the protuberance (84) fits into the seat (80) so as to form an undercut in a direction perpendicular to the stopper (36).

8. Actuation device (4) according to claim 6 or 7, wherein the shaped coupling between the seat (80) and the protuberance (84) is shaped so as to couple and uncouple the stopper (36) from the tank (28) by rotating said stopper (36) around the first threaded connection means (56) connecting the attachment brackets (40) to each other.

9. Actuation device (4) according to any of the previous claims, wherein one of said attachment brackets (40') is the lower bracket, namely opposite said stopper (36) of the tank (28) of liquid, and extends in a single piece from a first to a second end (48,52), wherein the first end (48) is facing the connection portion (12) and the second end (52) is facing the support and guide portion (20), so as to intercept and connect further to each other the connection portion (12) and the support and guide portion (20).

10. Actuation device (4) according to any of the previous claims, wherein the stopper (36) comprises an inner collar (88) substantially counter-shaped to an inner side wall (90) of said opening (32) of the tank (28), so as to at least partially penetrate inside said opening (32) and identify an interspace (92) comprised between the inner collar (88) and said inner side wall (90).

11. Actuation device (4) according to claim 10, wherein the tank (28) comprises a membrane gasket (94) which occludes said aperture (32), said gasket (94) being provided with a sealing lip (96) which, in an assembled configuration, inserts itself in said interspace (92) so as to be radially compressed between the inner collar (88) and said inner side wall (90).

12. Actuation device (4) according to claim 11, wherein the membrane gasket (94) is fitted with an upper lip (98) having a greater extension than the opening (32) of the tank (28) so as to form an undercut to the penetration of the gasket (94) inside the tank (28), said upper lip (98), in an assembled configuration, stopping in abutment against a perimetral rim (102) which follows the perimeter of said opening (32).

13. Actuation device (4) according to claim 12, wherein the stopper (36) comprises a perimetral seat (104) counter-shaped to said upper lip (98) of the gasket (94), so as to receive the upper lip (98) with interference.

14. Actuation device (4) according to claim 13, wherein the stopper (36) comprises a perimetral rib (107) positioned at said perimetral seat (104) so as to compress and increase the hermetic seal of said upper lip (98).

15. Actuation device (4) according to any of the claims from 10 to 14, wherein said inner collar (88) comprises a first flange (106) connected by means of a radial recess (108) to a second flange (110), said second flange (110) and said radial recess (108) defining the interspace (92) which houses a sealing lip (96) of the gasket (94).

## Patentansprüche

1. Betätigungsvorrichtung (4) für Bremsen und/oder Kupplungen, insbesondere für Motorräder, die umfasst:
- einen Vorrichtungskörper (8), der mit einem Flüssigkeitsbehälter (12) für die Betätigung der genannten Vorrichtung (4) und einer Pumpe, die geeignet ist, die Flüssigkeit unter Druck zu setzen, versehen ist, wobei der Behälter (28) mit einer Öffnung (32) und einem relativen Anschlag (36), der auf die Öffnung (32) angewendet wird, versehen ist,
- einen Verbindungsabschnitt (12), der geeignet ist, um die Befestigung der Vorrichtung (4) an der Lenkstange (16) eines verbindbaren Motorrads zuzulassen,
- einen Führungs- und Halteabschnitt (20) eines Betätigungselements (24), der sich um einen Führungsstift (54), der eine Betätigungsachse (Y-Y) definiert, dreht, um die Pumpe zu beeinflussen,
- wobei der Verbindungsabschnitt (12) ein Paar von Befestigungsklammern (40) umfasst, die teilweise zu der verbindbaren Lenkstange (16) gegenläufig geformt sind, um ein Gehäuseauflager (44) mit einem zylindrischen Aufbau der Längsachse (X-X) zu bilden, das geeignet ist, um den Abschnitt der Lenkstange (16) teilweise unterzubringen, der für die Befestigung der Betätigungsvorrichtung (24) verwendet wird,
- wobei die Vorrichtung (4) ein Paar von Gewindeverbindungsmitteln (56, 60) umfasst, welche die Befestigungsklammern (40) miteinander verbinden, um die Wände, die das Gehäuseauflager (44) definierten, gegen die verbindbare Lenkstange (16) festzuspannen,
**dadurch gekennzeichnet, dass**
- der Anschlag (36) einen ersten Befestigungsabschnitt (64) umfasst, um den Anschlag (36) auf den Vorrichtungskörper (8) zu beschränken, wobei der erste Befestigungsabschnitt (64) eines der Gewindeverbindungsmittel (56, 60) und/oder des Führungsstifts (54) auffängt, um den Anschlag zu befestigen und den Behälter (28) hermetisch abzudichten.

2. Betätigungsvorrichtung (4) nach Anspruch 1, wobei der erste Befestigungsabschnitt (64) eine perforierte Grundplatte umfasst, die von einem der Gewindeverbindungsmittel (56, 60) und/oder dem Führungsstift (54) gekreuzt wird.

3. Betätigungsvorrichtung (4) nach Anspruch 1 oder 2, wobei der erste Befestigungsabschnitt (64) einen Hakenabschnitt (65) umfasst, der mit einer Öffnung versehen ist, um eines der Gewindeverbindungsmittel (56, 60) und/oder den Führungsstift (54) aufzufangen und aufzunehmen.

4. Betätigungsvorrichtung (4) nach einem der vorhergehenden Ansprüche, wobei der erste Befestigungsabschnitt (64) ein Gewindeverbindungsmittel (56) auffängt, das die Befestigungsklammern (40), die benachbart zu dem Führungs- und Halteabschnitt 20 des Betätigungselements (24) der Vorrichtung (4) positioniert sind, miteinander verbindet.

5. Betätigungsvorrichtung (4) nach einem der vorhergehenden Ansprüche, wobei der Anschlag (36) einen zweiten Befestigungsabschnitt (72) umfasst, der getrennt von dem ersten Befestigungsabschnitt (64) ist, und durch zweite lösbare Verbindungsmittel (76) auf den Vorrichtungskörper (8) beschränkt wird.

6. Betätigungsvorrichtung (4) nach Anspruch 5, wobei die zweiten lösbaren Verbindungsmittel (76) eine Formkupplung zwischen einem Auflager (80) und einem Vorsprung (84) umfassen, die jeweils auf dem Vorrichtungskörper (8) und auf dem Anschlag (36) oder umgekehrt ausgebildet sind.

7. Betätigungsvorrichtung (4) nach Anspruch 6, wobei der Vorsprung (84) in das Auflager (80) passt, um eine Unterschneidung in einer Richtung senkrecht zu dem Anschlag (36) zu bilden.

8. Betätigungsvorrichtung nach Anspruch 6 oder 7, wobei die Formkupplung zwischen dem Auflager (80) und dem Vorsprung (84) geformt ist, um den Anschlag (36) mit dem Behälter (28) zu koppeln und davon zu entkoppeln, indem der Anschlag (36) um das erste Gewindeverbindungsmittel (56), das die Befestigungsklammern (40) miteinander verbindet, gedreht wird.

9. Betätigungsvorrichtung (4) nach einem der vorhergehenden Ansprüche, wobei eine der Befestigungsklammern (40') die untere Klammer, nämlich entgegengesetzt zu dem Anschlag (36) des Flüssigkeitsbehälters (28), ist, und sich in einem einzigen Stück von einem ersten zu einem zweiten Ende (48, 52) erstreckt, wobei das erste Ende (48) dem Verbindungsabschnitt (12) zugewandt ist und das zweite Ende (52) dem Halte- und Führungsabschnitt (20) zugewandt ist, um den Verbindungsabschnitt (12) und den Halte- und Führungsabschnitt (20) aufzufangen und ferner miteinander zu verbinden.

10. Betätigungsvorrichtung (4) nach einem der vorhergehenden Ansprüche, wobei der Anschlag (36) eine Innenmanschette (88) umfasst, die im Wesentlichen gegenläufig zu einer inneren Seitenwand (90) der Öffnung (32) des Behälters (28) geformt ist, um wenigstens teilweise ins Innere der Öffnung (32) einzudringen und einen Zwischenraum (92) zu bestimmen, der zwischen der Innenmanschette (88) und der inneren Seitenwand (90) enthalten ist.

11. Betätigungsvorrichtung (4) nach Anspruch 10, wobei der Behälter (28) eine Membrandichtung (94) umfasst, die die Öffnung (32) verschließt, wobei die Dichtung (94) mit einer Dichtungslippe (96) versehen ist, die sich in einem montierten Aufbau selbst in den Zwischenraum (92) einsetzt, um zwischen der Innenmanschette (88) und der inneren Seitenwand (90) radial komprimiert zu werden.

12. Betätigungsvorrichtung (4) nach Anspruch 11, wobei die Membrandichtung (94) mit einer oberen Lippe (98) ausgestattet ist, die eine größere Ausdehnung als die Öffnung (32) des Behälters (28) hat, um eine Unterschneidung für das Eindringen der Dichtung (94) ins Innere des Behälters (28) zu bilden, wobei die obere Lippe (98) in einem montierten Aufbau anliegend gegen einen Umfangsrand (102), der dem Umfang der Öffnung (32) folgt, stoppt.

13. Betätigungsvorrichtung (4) nach Anspruch 12, wobei der Anschlag (36) ein Umfangsauflager (104) umfasst, das gegenläufig zu der oberen Lippe (98) der Dichtung (94) ausgebildet ist, um die obere Lippe (98) festsitzend aufzunehmen.

14. Betätigungsvorrichtung (4) nach Anspruch 13, wobei der Anschlag (36) eine Umfangsrippe (107) umfasst, die an dem Umfangsauflager (104) positioniert ist, um die hermetische Dichtung der oberen Lippe (98) zu komprimieren und zu verstärken.

15. Betätigungsvorrichtung (4) nach einem der Ansprüche 10 bis 14, wobei die Innenmanschette (88) einen ersten Flansch (106) umfasst, der mittels einer radialen Aussparung (108) mit einem zweiten Flansch (110) verbunden ist, wobei der zweite Flansch (110) und die radiale Aussparung (108) den Zwischenraum (92) definieren, der eine Dichtungslippe (96) der Dichtung (94) unterbringt.

## Revendications

1. Dispositif actionneur (4) pour des freins et/ou des embrayages, en particulier pour des motocycles, comprenant
- un corps de dispositif (8) doté d'un réservoir de liquide (28) pour l'actionnement dudit dispositif (4) et une pompe appropriée pour mettre sous pression ledit liquide, le réservoir (28) étant doté d'une ouverture (32) et d'un obturateur relatif (36) appliqué à ladite ouverture (32),
- une portion de liaison (12) appropriée pour permettre la fixation du dispositif (4) au guidon (16) d'un motocycle pouvant y être associé,
- une portion de guidage et de support (20) d'un élément actionneur (24) du dispositif (4) tournant autour d'une tige de guidage (54) définissant un axe d'actionnement (Y-Y) de manière à influer sur ladite pompe,
- dans lequel la portion de liaison (12) comprend une paire de pattes de fixation (40) de forme partiellement complémentaire au guidon pouvant être associé (16) de manière à former un siège de réception (44) ayant une configuration cylindrique de l'axe longitudinal (X-X), appropriée pour loger partiellement la portion du guidon (16) utilisée pour la fixation du dispositif actionneur (24),
- dans lequel le dispositif (4) comprend une paire de moyens de liaison filetée (56, 60) qui relie les pattes de fixations (40) l'une à l'autre de manière à serrer les parois définissant le siège de réception (44) contre le guidon pouvant être associé (16),
**caractérisé en ce que**
- l'obturateur (36) comprend une première portion de fixation (64) pour limiter l'obturateur (36) au corps de dispositif (8), dans lequel la première portion de fixation (64) intercepte l'un parmi les moyens de liaison filetée (56, 60) et/ou la tige de guidage (54) pour fixer l'obturateur et sceller hermétiquement le réservoir (28).

2. Dispositif actionneur (4) selon la revendication 1, dans lequel la première portion de fixation (64) comprend une plaque de base perforée traversée par l'un parmi les moyens de liaison filetée (56, 60) et/ou la tige de guidage (54).

3. Dispositif actionneur (4) selon la revendication 1 ou 2, dans lequel la première portion de fixation (64) comprend une portion crochet (65) dotée d'une ouverture de manière à intercepter et recevoir au moins partiellement l'un parmi les moyens de liaison filetée (56, 60) et/ou la tige de guidage (54).

4. Dispositif actionneur (4) selon l'une quelconque des revendications précédentes, dans lequel la première portion de fixation (64) intercepte un moyen de liaison filetée (56), qui lie les pattes de fixations (40) l'une à l'autre, positionné adjacent à la portion de guidage et de support (20) de l'élément actionneur (24) du dispositif (4).

5. Dispositif actionneur (4) selon l'une quelconque des revendications précédentes, dans lequel l'obturateur (36) comprend une seconde portion de fixation (72), distincte de ladite première portion de fixation (64), et limitée au corps de dispositif (8) par des seconds moyens de liaison détachable (76).

6. Dispositif actionneur (4) selon la revendication 5, dans lequel lesdits seconds moyens de liaison détachable (76) comprennent un couplage profilé, entre un siège (80) et une saillie (84) crées respectivement sur le corps de dispositif (8) et sur l'obturateur (36) ou vice versa.

7. Dispositif actionneur (4) selon la revendication 6, dans lequel la saillie (84) s'adapte dans le siège (80) de manière à former un dégagement dans une direction perpendiculaire à l'obturateur (36).

8. Dispositif actionneur (4) selon la revendication 6 ou 7, dans lequel le couplage profilé entre le siège (80) et la saillie (84) est profilé de manière à se coupler et à se désaccoupler de l'obturateur (36) à partir du réservoir (28) par la rotation dudit obturateur (36) autour du premier moyen de liaison filetée (56) reliant les pattes de fixation (40) l'une à l'autre.

9. Dispositif actionneur (4) selon l'une quelconque des revendications précédentes, dans lequel l'une desdites pattes de fixation (40') est la patte inférieure, à savoir opposée audit obturateur (36) du réservoir (28) de liquide, et s'étend d'un seul tenant d'une première extrémité à une seconde extrémité (48, 52), dans lequel la première extrémité (48) est orientée vers la portion de liaison (12) et la seconde extrémité (52) est orientée vers la portion de support et de guidage (20), de manière à intercepter et lier davantage l'une à l'autre la portion de liaison (12) et la portion de support et de guidage (20).

10. Dispositif actionneur (4) selon l'une quelconque des revendications précédentes, dans lequel l'obturateur (36) comprend un collier interne (88) de forme sensiblement complémentaire à une paroi latérale interne (90) de ladite ouverture (32) du réservoir (28), de manière à au moins partiellement pénétrer à l'intérieur de ladite ouverture (32) et identifier un interstice (92) compris entre le collier interne (88) et ladite paroi latérale interne (90).

11. Dispositif actionneur (4) selon la revendication 10, dans lequel le réservoir (28) comprend un joint à membrane (94) qui obstrue ladite ouverture (32), ledit joint (94) étant doté d'une lèvre d'étanchéité (96) qui, dans une configuration assemblée, s'insère dans ledit interstice (92) de manière à être comprimé radialement entre le collier interne (88) et ladite paroi latérale interne (90).

12. Dispositif actionneur (4) selon la revendication 11, dans lequel le joint à membrane (94) est muni d'une lèvre supérieure (98) ayant une extension supérieure à l'ouverture (32) du réservoir (28) de manière à former un dégagement pour la pénétration du joint (94) à l'intérieur du réservoir (28), ladite lèvre supérieure (98), dans une configuration assemblée, s'arrêtant en butée contre un bord périphérique (102) qui suit la périphérie de ladite ouverture (32).

13. Dispositif actionneur (4) selon la revendication 12, dans lequel l'obturateur (36) comprend un siège périphérique (104) de forme complémentaire à ladite lèvre supérieure (98) du joint (94), de manière à recevoir la lèvre supérieure (98) par serrage.

14. Dispositif actionneur (4) selon la revendication 13, dans lequel l'obturateur (36) comprend une nervure périphérique (107) positionnée au niveau dudit siège périphérique (104) de manière à comprimer et augmenter le scellement hermétique de ladite lèvre supérieure (98).

15. Dispositif actionneur (4) selon l'une quelconque des revendications 10 à 14, dans lequel ledit collier interne (88) comprend un premier rebord (106) relié au moyen d'un évidement radial (108) à un second rebord (110), ledit second rebord (110) et ledit évidement radial (108) définissant l'interstice (92) qui loge une lèvre d'étanchéité (96) du joint (94).
